# NEUE EUROPÄISCHE PATENTSCHRIFT

(11) **EP 0 499 948 B2**
(45) Veröffentlichungstag und Bekanntmachung des Hinweises auf die Entscheidung über den Einspruch: **31.01.2001**
(45) Hinweis auf die Patenterteilung: 17.11.1994
(21) Anmeldenummer: 92102258.8
(22) Anmeldetag: 11.02.1992
(51) Int. Cl.: B60R 1/08

(54) **Abblendbarer Innenspiegel für ein Fahrzeug**
Anti-glare interior vehicle mirror
Rétroviseur intérieur de véhicule anti-éblouissant

(30) Priorität: 20.02.1991 DE 9101986 U
(43) Veröffentlichungstag der Anmeldung: 26.08.1992
(73) Patentinhaber: HOHE KG, D-97903 Collenberg (DE)
(72) Erfinder: Kloschefski, Werner, W-8765 Erlenbach (DE); Seitz, Edwin, W-6985 Stadtprozelten-Neuenbuch (DE)
(74) Vertreter: Zinngrebe, Horst, Dr.rer.nat.

(56) Entgegenhaltungen:
- DE-A- 2 165 226
- DE-A- 2 406 381
- DE-U- 8 319 673
- FR-A- 2 537 067
- US-A- 3 029 701
- US-A- 3 748 025

## Beschreibung

Die Erfindung betrifft einen Innenspiegel nach dem Oberbegriff des Anspruches 1.

Aus US-A-3 029 701 ist ein Kfz-Innenspiegel bekannt, bei welchem eine Blattfeder, die gegen eine Abflachung des Führungsteils anliegt, dafür sorgen soll, daß das Spiegelglas des Innenspiegels sowohl in der Abblendstellung wie in der Normalstellung vibrationsfrei stehenbleibt. Die Beobachtung mit einem derartigen Innenspiegel zeigt jedoch, daß mit dieser Maßnahme eine Ruhigstellung des Spiegelglases nicht erreicht werden kann. Außerdem bewirkt eine Verstellung des Spiegelgehäuses, die zur Anpassung an die Sitzposition des Fahrers erforderlich ist, leicht eine Veränderung beispielsweise der Abblendstellung des Spiegelglases.

Aus der Deutschen Offenlegungsschrift 2 165 226 ist ein Innenspiegel gemäß dem Oberbegriff des Anspruchs 1 bekannt, bei dem ein Klemmstück auf eine Kugel verstellbar aufgeklemmt ist, welche von einem freien Ende eines an dem Fahrzeug befestigbaren Tragarms vorsteht. An dem Klemmstück ist ein Spiegelgehäuse um eine Achse verschwenkbar gelagert, die sich im wesentlichen parallel zu einer Außenfläche eines an der Vorderseite des Spiegelgehäuses befestigten Spiegelglases erstreckt. Zur Verstellung des Innenspiegels zwischen einer Normal- oder Tagesstellung und einer abgeblendeten Nachtstellung dient ein aus dem Klemmstück vorstehender Finger, der in eine in den Mantel eines zylindrischen Führungsteils eingebrachte Nut eingreift. Der Führungszylinder ist mit einem aus einer unteren Öffnung des Spiegelglases vorstehenden Betätigungshebel verbunden, und die Nut verläuft schräg zur Drehachse des Zylinders. Durch Umlegen des Betätigungshebels kann das keilförmige Spiegelglas zwischen der Normalstellung und der Abblendstellung verschwenkt werden.

Bei diesem Innenspiegel wird der Finger in die beiden vertieften Endlagen der Nut elastisch gedrückt, so daß das Spiegelgehäuse die jeweils eingestellte Endlage einigermaßen definiert beibehält. Das Fahrzeug wird jedoch wie häufig von mehreren Fahrern bedient, deren Sitzposition eine jeweils andere Grundstellung des Spiegelgehäuses relativ zum Tragarm erfordert. Bei dem dadurch notwendig werdenden Verstellen des Spiegelgehäuses wird häufig unbeabsichtigt auch die Kippstellung des Spiegelglases verändert, was nicht erwünscht ist. Ferner erleidet das Spiegelglas beim Betrieb des Fahrzeugs je nach Motordrehzahl unerwünschte Vibrationen, die die klare Sicht des Fahrers über den Innenspiegel nach hinten erschweren.

Der Erfindung liegt daher die Aufgabe zugrunde, einen Innenspiegel zu schaffen, bei dessen Verstellung relativ zum Tragarm eine Beeinflußung der Kipplage des Spiegelglases praktisch ausgeschlossen ist. Ferner soll die Möglichkeit geschaffen werden, Vibrationen des Spiegelglases möglichst weitgehend zu unterdrücken.

Bei dem eingangs genannten Innenspiegel wird diese Aufgabe erfindungsgemäß durch den Innenspiegel nach Anspruch 1 gelöst. Dadurch wird es möglich, daß bei Verstellung des Spiegelgehäuses relativ zum Tragarm, wie sie zur Anpassung einer veränderten Sitzposition des Fahrers erforderlich ist, die Schwenkstellungen des Spiegelglases in Tag- oder Nachstellung nicht verändert werden können.

Bevorzugte Ausgestaltungen der Erfindung sind in den Unteransprüchen angegeben.

Nachstehend wird die Erfindung im einzelnen anhand der beigefügten Zeichnung erläutert. Es zeigen:

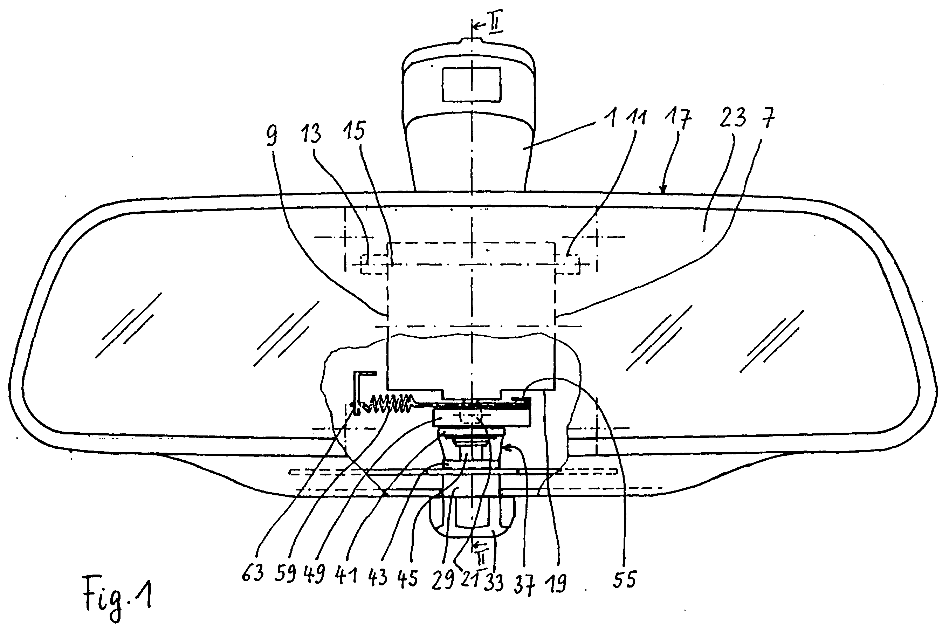

- Fig. 1:: eine schematische Frontansicht eines Kfz-Innenspiegels mit teilweise aufgebrochenem Spiegelglas und Spiegelgehäuse;
- Fig. 2:: eine schematische Darstellung eines Schnittes längs der Linie II - II aus Figur 1 in der Tagstellung des Spiegelgehäuses;
- Fig. 3:: eine der Figur 2 ähnliche Ansicht der Nachtstellung des Spiegelgehäuses; und
- Fig. 4:: eine schematische Darstellung der Wirkungsweise des Verstellmechanismus'.

Der Kfz-Innenspiegel weist einen abgekröpften Tragarm 1 auf, der am spiegelgehäusefernen Ende zur Befestigung am nicht dargestellten Fahrzeug vorbereitet ist und an seinem spiegelgehäusenahen Ende eine Gelenkkugel 3 aufweist. Auf die Gelenkkugel ist ein im ganzen mit 5 bezeichnetes Klemmstück in an sich bekannter Weise aufgeklemmt, so daß das Klemmstück 5 zwar fest auf der Gelenkkugel 3 sitzt, jedoch auf der Kugelperipherie von Hand verschiebbar ist.

Von dem in spiegelseitiger Ansicht plattenförmigen Klemmstück 5 stehen oberhalb der Gelenkkugel 3 von je einer von zwei gegenüberliegenden Seitenflächen 7, 9 fluchtende Gelenkzapfen 11, 13 ab, deren gemeinsame Mittellinie eine Kippachse 15 für das Spiegelgehäuse 17 definieren. Dazu sind die Gelenkzapfen 11, 13 in je ein nicht dargestelltes, spiegelgehäusefestes Auge eingebracht, in welchem je einer der Gelenkzapfen 11, 13 drehbar eingefangen ist. Damit kann das Spiegelgehäuse 17, welches die Gelenkkugel 3 mit Abstand umgibt, um die Achse 15 relativ zum Klemmstück 5 und damit zum Tragarm 1 kippen. Aus dem unteren Ende 19 des Klemmstücks 5 steht mittig nach unten ein Finger 21 vor, dessen freies Ende ballig geformt ist. Das ballige Ende des Fingers 21 ist in einem noch zu beschreibenden Schlitz 31 in einem noch zu erläuternden, im Spiegelgehäuse 17 drehbar gelagerten Führungsteil 35 eingefangen.

Das Spiegelgehäuse 17 trägt vorne, das heißt gegenüber dem Klemmstück 5 in an sich bekannter Weise ein Spiegelglas 23 mit keilförmigem Querschnitt und weist in der Mitte seiner Unterseite einen Durchbruch 27 zum Durchtritt eines mit dem Führungsteil 35 verbundenen Schaftes 29 eines Drehknopfes 33 auf.

Unterhalb des Fingers 21 ist an einer Innenfläche des Spiegelgehäuses 17 eine Gabel 37 mit ihrer Basis 39 fest verbunden, deren vertikal beabstandete Schenkel 41, 43 mit zwei fluchtenden Durchbohrungen zur drehbaren Aufnahme einer verjüngten Fortsetzung 45 des Schaftes 29 beziehungsweise eines Ansatzes 47 des Führungsteils 35 versehen sind.

Das Führungsteil 35 besteht aus einer Scheibe 49, aus deren Unterseite der Ansatz 47 vorsteht. Die Scheibe 49 und den Ansatz 47 durchdringt eine Durchgangsbohrung 51, in welche sich der verjüngte Schaft 45 vermöge des Eingriffs einer radial einwärts vorstehenden Rippe 53 in eine entsprechende Nut im verjüngten Schaftteil 45 relativ zum Führungsteil 35 unverdrehbar erstreckt. Ein in den Schaftteil 45 eingreifender und die Bohrung im unteren Schenkel 43 überdeckender erster Sicherungsring sowie ein entsprechender Sicherungsring, der in den Ansatz 47 radial eingreift und die Bohrung im Schenkel 41 überdeckt, halten den Drehknopf und das Führungsteil 35 vertikal in der Gabel 37.

Die Platte 49 besitzt neben der Bohrung 51 den erwähnten, um die Bohrung 51 mit zunehmendem Abstand von dieser leicht gebogenen Schlitz 31. Aus der Oberseite der Platte 49 erhebt sich ein Ankerzapfen 55, welchen ein Ende 57 einer Zugfeder 59 umgreift. Das gegenüberliegende Ende 61 der Zugfeder 59 ist in eine spiegelgehäusefeste Öse 63 eingehängt.

Die Anordnung ist so getroffen, daß die Drehachse 65 des Drehknopfs 33 und damit der Scheibe 49 parallel zur Vorderfläche 69 des Spiegelglases 23, oder, falls der Spiegel 23 konvex gewölbt ist, zur vorderen Mittellinie des Spiegels verläuft. Ferner steht eine gedachte Verbindungslinie der Mittellinie 67 des Fingers 21 mit der Achse 65 senkrecht auf der Vorderfläche 69 des Spiegels 23. Ferner liegen der Ankerzapfen 55 und die Öse 63 bezüglich der Bohrung 51 einander im wesentlichen gegenüber.

Die beiden Kippstellungen des Innenspiegels, nämlich die Normallage (Tag) und die Abblendlage (Nacht) sind dadurch definiert, daß das ballige Ende des Fingers 21 gegen jeweils eines der beiden Enden des Schlitzes 31 anliegt. Die Länge des Schlitzes 31 und seine Lage in der Scheibe 49 sind so gewählt, das die Wirklinie 68, längs der die Feder 59 ihre Zugkraft entfaltet, in der ersten Kippstellung des Spiegelgehäuses 17 relativ zum Klemmstück 5 auf einer Seite der Verbindungslinie 71 zwischen der Achse 65 und der Öse 63 liegt und beim Übergang in die andere Kippstellung auf die andere Seite der Verbindungslinie 71 bis zur Wirklinie 73 wandert, längs der die Feder 59 in der anderen Kipplage wirkt. Im dargestellten Ausführungsbeispiel liegen die Wirklinien 69 und 73 symmetrisch zur Verbindungslinie 71.

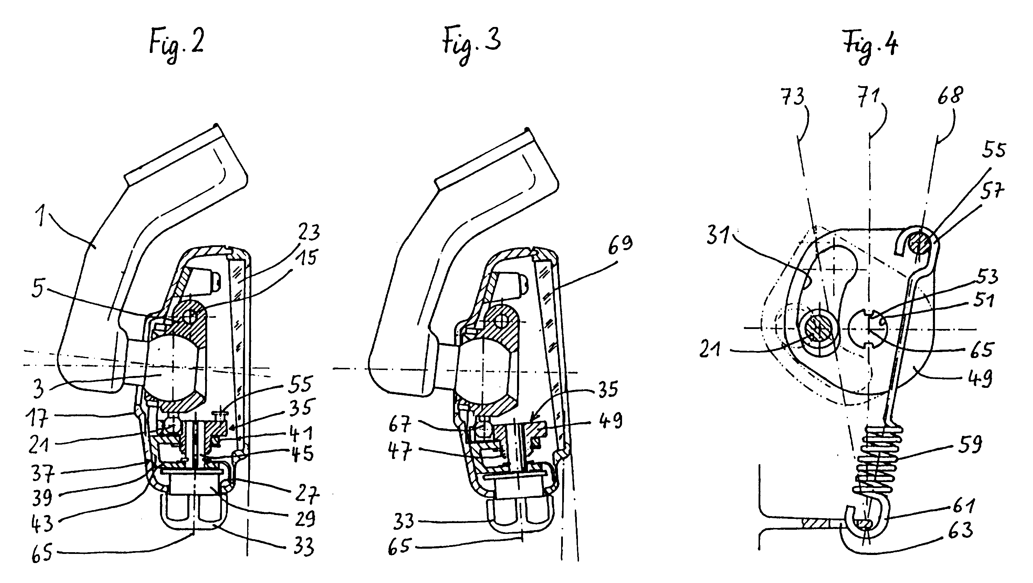

Zum Abblenden des Innenspiegels von der in Figur 2 dargestellten Tagstellung (Normalstellung) muß der Drehknopf 33 von Hand zunächst gegen die zunehmende Wirkung der Zugfeder 59 gedreht werden. Der Finger 21 gleitet dabei in dem Führungsschlitz 31. Da dieser bezüglich des Klemmstücks 5 fest ist, der Schlitz sich jedoch von der Bohrung 51 radial entfernt, neigt sich das Spiegelgehäuse um die Achse 15. Wenn der halbe Betätigungsweg des Drehknopfs 33 zurückgelegt ist, fällt die Wirklinie 68 mit der Verbindungslinie 71 zusammen, und bei Weiterdrehung des Drehknopfes 33 zieht die Zugfeder 59 das Führungsteil 35 mit Drehknopf 33 selbsttätig in die gleiche Richtung weiter, bis der Finger 21 gegen das andere Ende des Schlitzes 31 anläuft. Diese Stellung zeigt Figur 3.

Der beschriebene Verstellmechanismus ist zunächst darin vorteilhaft, daß vermöge der Zugefeder 59 das Spiegelgehäuse relativ fest in die beiden Kippendlagen gedrückt wird, wobei die Rückstellkraft in die Kippendlagen gerade bei kleinen Abweichungen von denselben besonders hoch ist. Dadurch wird eine erhöhte Vibrationsfreiheit des Spiegelglases erreicht.

Ferner bleibt die Kippstellung des Spiegelgehäuses von Verstellkräften, die auf das Spiegelgehäuse zu dessen Verstellen mit dem Klemmstück 5 relativ zur Gelenkkugel 3 ausgeübt werden, grundsätzlich unbeeinflußt, und zwar aufgrund der besonderen Anordnung der Mittellinie des Fingers 21 und der Drehachse 65 zum Spiegelglas 23. Damit ist eine absolut starre Lage des Spiegels mit Spiegelgehäuse gewährleistet, die auch bei extremer Verstellung des Spiegelgehäuses mit dem Klemmstück 5 relativ zum Tragarm 1 nicht aus ihrer jeweiligen Endlage herausgebraht werden können.

Statt der Zugfeder 59 kann selbstverständlich auch eine Druckfeder vorgesehen sein, wobei dann der Ankerzapfen 55 bezüglich der Bohrung 51 auf der gleichen Seite wie die Öse 63 angordnet werden müßte.

## Patentansprüche

1. Innenspiegel für ein Fahrzeug mit einem Tragarm (1), auf welchen ein mit einem Spiegelglas (23) versehenes Spiegelgehäuse (17) verstellbar aufgeklemmt ist, wobei das Spiegelgehäuse (17) auf einem auf den Tragarm (1) aufgeklemmten Klemmstück (5) um eine parallel zum Spiegelglas (23) sich ertreckende Achse (15) zwischen einer Normalstellung (Fig. 2) und einer Abblendstellung verschwenkbar befestigt ist und ein Verschwenkmechanismus vorgesehen ist, welcher ein neben dem Klemmstück (5) im Spiegelgehäuse (17) drehbar gelagertes und aus einer Öffnung (27) in einer Seitenfläche des Spiegelgehäuses (17) vorstehendes Betätigungsorgan (33) sowie ein mit einem Führungsschlitz (31) versehenes Führungsteil (35) aufweist, wobei ferner in den Führungsschlitz (31) ein am Klemmstück (5) befestigter Finger (21) eintaucht und das Führungsteil in die beiden Enden des Führungsschlitzes elastisch beaufschlagt ist, dadurch gekennzeichnet, daß das Führungsteil (35) im Spiegelgehäuse (17) um eine Achse (65) drehbar gelagert ist, welche sich parallel zur Mittellinie (69) des Spiegelglases (23) und senkrecht zur Schwenkachse (15) erstreckt, und daßwischen Führungsteil (35) und einer Stelle (63) im Spiegelgehäuse (17) eine Feder (59) derart eingespannt ist, daß die Wirkrichtung (68) der von der Feder (59) entwickelten Kraft in Normalstellung des Spiegelgehäuses und die Wirkrichtung (73) der Feder (59) bei Abblendstellung relativ zu einer gedachten Verbindungslinie (71) zwischen der Stelle (63) und der Drehachse (65) des Führungsteils (35) einander gegenüberliegen, wobei die Verbindungslinie zwischen der Mittellinie (67) des Fingers (21) und der Drehachse (65) des Führungsteils (35) im wesentlichen senkrecht auf einer Fläche des Spiegelglases (23) steht.

2. Innenspiegel nach Anspruch 1, dadurch gekennzeichnet, daß die Feder eine Zugfeder (59) ist und an einem aus dem Führungsteil (35) vorstehenden Zapfen (55) angreift, wobei die Drehachse (65) zwischen dem Zapfen (55) und der Stelle (63) liegt.

3. Innenspiegel nach einem der vorstehenden Ansprüche, dadurch gekennzeichnet, daß das Führungsteil (35) in einer am Spiegelgehäuse (17) ausgebildeten Gabel (37) drehbar gelagert ist.

4. Innenspiegel nach einem der vorstehenden Ansprüche, dadurch gekennzeichnet, daß das Führungsteil (35) auf einen Schaft (29, 45) eines Drehknopfes (33) unverdrehbar sitzt.

5. Innenspiegel nach einem der vorstehenden Ansprüche, dadurch gekennzeichnet, daß das Führungsteil (35) zwischen dem Finger (21) und dem Spiegelglas (23) im Spiegelgehäuse (17) gelagert ist.

6. Innenspiegel nach Anspruch 5, dadurch gekennzeichnet, daß die Drehachse (65) des Führungsteils (35) im wesentlichen parallel zu einer Außenfläche des Spiegelglases (23) sich erstreckt.

## Claims

1. An interior mirror for a vehicle, having a supporting arm (1) to which a mirror housing (17) provided with mirror glass (23) is adjustably attached, wherein the mirror housing (17) is fixed to an attachment member (5), attached to the supporting arm (1), so as to be tiltable about an axis (15) extending parallel to the mirror glass (23) between a normal position (Fig. 2) and an anti-dazzle position, and a tilting mechanism is provided having an actuating member (33) adjoining the attachment member (5) rotatably mounted in the mirror housing (17) and projecting from an opening (27) in a side surface of the mirror housing (17) and a guide member (35) provided with a guide slot (31), a finger (21) fixed to the attachment member (5) engaging further in the guide slot (31) and the guide member being resiliently acted upon at the two ends of the guide slot, characterised in that the guide member (35) is rotatably mounted in the mirror housing (17) about an axis (65) which extends parallel to the centre line (69) of the mirror glass (23) and perpendicular to the pivot axis (15), and in that a spring (59) is mounted between the guide member (35) and a point (63) in the mirror housing (17) such that the direction (68) of the force generated by the spring (59) in the normal position of the mirror housing and the direction (73) of the spring (59) in the anti-dazzle position are on opposite sides of an imaginary connecting line (71) between the point (63) and the rotation axis (65) of the guide member (35), the connecting line between the centre line (67) of the finger (21) and the axis of rotation (65) of the guide member (35) being substantially perpendicular to a surface of the mirror glass (23).

2. An interior mirror according to claim 1, characterised in that the spring is a tension spring (59) and engages a pin (55) projecting from the guide member (35), the rotation axis (65) lying between the pin (55) and the point (63).

3. An interior mirror according to any one of the preceding claims, characterised in that the guide member (35) is rotatably mounted in a fork (37) formed on the mirror housing (17).

4. An interior mirror according to any one of the preceding claims, characterised in that the guide member (35) is non-rotatably positioned on a shaft (29, 45) of a rotary knob (33).

5. An interior mirror according to any one of the preceding claims, characterised in that the guide member (35) is mounted between the finger (21) and the mirror glass (23) in the mirror housing (17).

6. An interior mirror according to claim 5, characterised in that the axis of rotation (65) of the guide member (35) extends substantially parallel to an outer surface of the mirror glass (23).

## Revendications

1. Rétroviseur intérieur pour un véhicule avec un bras porteur (1), sur lequel un corps de rétroviseur (17) muni d'un miroir de rétroviseur (23) est bloqué de façon réglable, le corps de rétroviseur (17) étant fixé pivotant sur une pièce de blocage (5) fixée sur le bras porteur (1) autour d'un axe (15) s'étendant parallèlement au miroir de rétroviseur (23) entre une position normale (Fig. 2) et une position anti-éblouissement et un mécanisme de pivotement étant prévu, lequel présente un organe d'actionnement (33) placé près de la pièce de blocage (5) monté dans le corps de rétroviseur (17) de façon à pivoter et saillant d'une ouverture (27) dans une surface latérale du corps de rétroviseur (17) et une pièce de guidage (35) munie d'une fente de guidage (31), un doigt (21) fixé sur la pièce de blocage (5) plongeant en outre dans la fente de guidage (31) et la pièce de guidage étant sollicitée de façon élastique dans les deux extrémités de la fente de guidage, caractérisé en ce que la pièce de guidage (35) est montée de façon rotative dans le corps de rétroviseur (17) autour d'un axe (65) qui s'étend parallèlement à la ligne centrale (69) du miroir de rétroviseur (23) et perpendiculairement à l'axe de pivotement (15) et en ce qu'entre la pièce de guidage (35) et un point (63) dans le corps de rétroviseur (17) un ressort (59) est tendu de telle sorte que la direction d'action (68) de la force développée par le ressort (59) dans la position normale du corps de rétroviseur et la direction d'action (73) du ressort (59) dans la position anti-éblouissement sont opposées l'une à l'autre par rapport à une ligne de liaison imaginaire (71) entre le point (63) et l'axe de rotation (65) de la pièce de guidage (35), la ligne de liaison entre la ligne centrale (67) du doigt (21) et l'axe de rotation (65) de la pièce de guidage (35) étant sensiblement perpendiculaire à une surface du miroir de rétroviseur (23).

2. Rétroviseur intérieur selon la revendication 1, caractérisé en ce que le ressort est un ressort de traction (59) et s'engage sur un téton (55) saillant de la pièce de guidage (35), l'axe de rotation (65) étant situé entre le téton (55) et le point (63).

3. Rétroviseur intérieur selon l'une des revendications précédentes, caractérisé en ce que la pièce de guidage (35) est montée à rotation dans une fourche (37) formée sur le corps de rétroviseur (17).

4. Rétroviseur intérieur selon l'une des revendications précédentes, caractérisé en ce que la pièce de guidage (35) est montée non rotative sur une tige (29, 45) d'un bouton rotatif (33).

5. Rétroviseur intérieur selon l'une des revendications précédentes, caractérisé en ce que la pièce de guidage (35) est montée entre le doigt (21) et le miroir de rétroviseur (23) dans le corps de rétroviseur (17).

6. Rétroviseur intérieur selon la revendication 5, caractérisé en ce que l'axe de rotation (65) de la pièce de guidage (35) s'étend sensiblement parallèlement à une surface extérieure du miroir de rétroviseur (23).
